# FASCICULE DE BREVET EUROPEEN

(11) **EP 2 490 917 B1**
(45) Date de publication et mention de la délivrance du brevet: **29.11.2017**
(21) Numéro de dépôt: 10785132.1
(22) Date de dépôt: 18.10.2010
(51) Int. Cl.: B60K 37/00, B62D 25/14

(54) **TRAVERSE DE PLANCHE DE BORD DE VÉHICULE AUTOMOBILE**
QUERTRÄGER FÜR EIN AUTOMOBIL-ARMATURENBRETT
AUTOMOBILE DASHBOARD CROSS-MEMBER

(30) Priorité: 21.10.2009 FR 0957391
(43) Date de publication de la demande: 29.08.2012
(73) Titulaire: Faurecia Intérieur Industrie, 92000 Nanterre (FR)
(72) Inventeur: DA COSTA PITO, Sergio, F-95800 Courdimanche (FR); BAUDART, Laurent, F-60530 Fresnoy en Thelle (FR)
(74) Mandataire: Lavoix
(86) Numéro de dépôt international: PCT/FR2010/052208
(87) Numéro de publication internationale: WO 2011/048312

(56) Documents cités:
- EP-A1- 1 442 965
- EP-A1- 1 529 720
- EP-A1- 2 000 393
- DE-A1-102006 040 073

## Description

La présente invention concerne une traverse de planche de bord de véhicule automobile.

La traverse de planche de bord est destinée à s'étendre entre les montants latéraux avant - ou montant A - de la structure du véhicule automobile. Elle constitue un élément structurel du véhicule automobile et contribue à la rigidité de la structure du véhicule automobile. La traverse de planche de bord supporte la planche de bord, ainsi que des équipements associés, notamment une colonne de direction, un tableau de bord, un système de chauffage, de ventilation et de climatisation (HVAC), un système d'autoradio...

EP1529720A1 divulgue une poutre formant une traverse de planche de bord fixée sur des montants de la structure du véhicule par l'intermédiaire de flasques latéraux, la poutre comprenant un premier tube et un deuxième tube assemblés entre eux à leurs extrémités opposée à celle sur laquelle sont fixés les flasques. Le premier tube comprend un premier tronçon d'extrémité et un deuxième tronçon d'extrémité adapté à recevoir le deuxième tube, le deuxième tronçon d'extrémité possédant une partie aplatie vers l'extérieur.

EP2000393A1 divulgue une traverse de planche de bord selon le préambule de la revendication 1, formée d'un premier tube et d'un deuxième tube ayant une extrémité emmanchée dans une extrémité de section transversale réduite du premier tube.

Un but de la présente invention est de proposer une traverse de planche de bord possédant une rigidité satisfaisante tout en facilitant son intégration au sein de l'ensemble formé par la planche de bord et les équipements associés.

A cet effet, l'invention propose une traverse de planche de bord selon la revendication 1. Des caractéristiques optionnelles sont définies aux revendications 2 à 12.

L'invention concerne également une planche de bord selon la revendication 13 et ainsi qu'un véhicule automobile selon la revendication 14.

L'invention et ses avantages seront mieux compris à la lecture de la description qui va suivre, donnée uniquement à titre d'exemple, et faite en se référant aux dessins annexés, sur lesquels :
- la figure 1 est une vue schématique en perspective d'une traverse de planche de bord conforme à l'invention ;
- la figure 2 est une vue partielle agrandie de la zone II sur la figure 1 ;
- la figure 3 est une vue en bout de la traverse selon III-III sur la figure 2 ;
- la figure 4 est une vue en coupe de la traverse dans le sens de la longueur de la traverse selon IV-IV sur la figure 3.

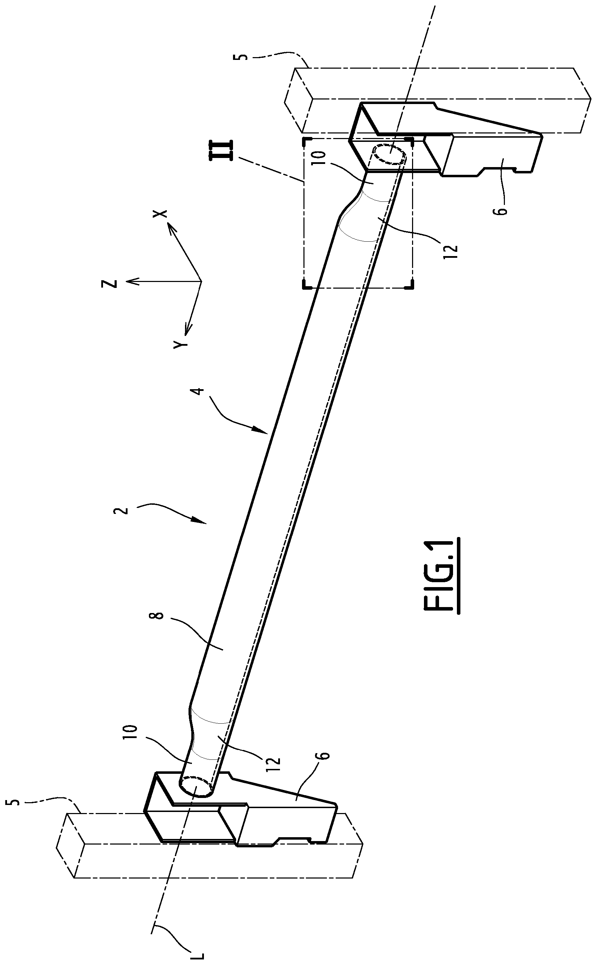

Telle que représentée sur la figure 1, la traverse 2 de planche de bord est formée d'un tube 4 réalisé d'un seul tenant. Le tube 4 s'étend entre les deux montants 5 latéraux avant de la structure du véhicule automobile. Ces montants 5 sont généralement nommés montants « A ». Chaque extrémité du tube 4 est fixée sur un montant 5 respectif par une attache 6 rapportée sur cette extrémité.

Dans la suite de la description, les termes « avant », « arrière », « droit », « gauche », « haut » et « bas », s'étendent pas référence au repère orthogonal usuel des véhicules automobile représenté sur la figure 1, et comprenant :
- un axe longitudinal X orienté de l'arrière vers l'avant ;
- un axe transversal Y orienté de la droite vers la gauche ;
- un axe vertical Z orienté du bas vers le haut.

Le tube 4 comprend un tronçon intermédiaire 8 et deux tronçons d'extrémité 10. Le tronçon intermédiaire 8 s'étend entre les deux tronçons d'extrémité 10. Au moins un des deux tronçons d'extrémité 10 possède une section transversale différente de celle du tronçon intermédiaire 8.

Dans l'exemple illustré, chaque tronçon d'extrémité 10 possède une section transversale différente de celle du tronçon intermédiaire 8. Le tronçon intermédiaire 8 et les tronçons d'extrémité 10 sont cylindriques et s'étendent suivant une direction d'extension L parallèle à l'axe transversal Y du véhicule automobile.

Chaque tronçon d'extrémité 10 est relié au tronçon intermédiaire 8 par un tronçon de transition 12.

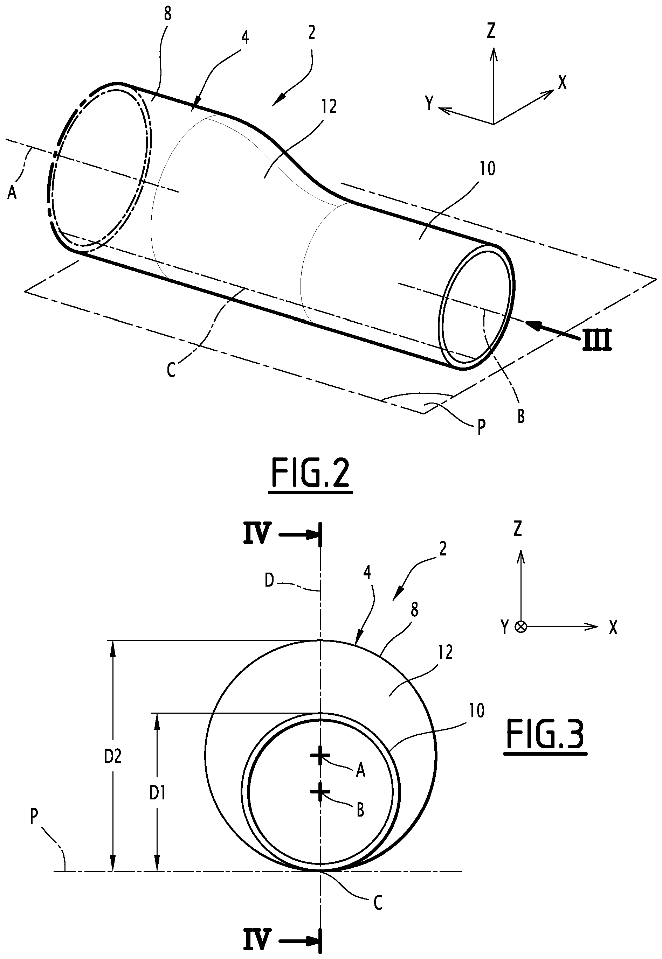

Les tronçons d'extrémité 10 droit et gauche sont analogues, et seul le tronçon d'extrémité 10 droit sera décrit en détail par la suite en référence aux figures 2 et 3 illustrant respectivement une vue agrandie du tronçon d'extrémité 10 droit et une vue en bout du tube 4 depuis la droite.

Tel que représenté sur la figure 2, le tronçon intermédiaire 8 est cylindrique de section transversale à contour extérieur convexe.

Le tronçon d'extrémité 10 droit est cylindrique de section transversale à contour extérieur convexe et s'étend suivant la même direction que le tronçon intermédiaire 8.

Le tronçon d'extrémité 10 droit comprend un plan P tangent extérieurement qui est également tangent extérieurement au tronçon intermédiaire 8. Le plan tangent P est parallèle à la direction d'extension du tronçon d'extrémité 10 et du tronçon intermédiaire 8.

Le terme « cylindrique » désigne de manière générale une surface ou une paroi tubulaire s'étendant suivant une direction et définie par une infinité de droites parallèles entre elles et à ladite direction, nommées « génératrices », passant par une courbe, nommées « directrice », correspondant en pratique à la section transversale de la surface ou de la paroi tubulaire.

Du fait de l'existence d'au moins un plan P tangent extérieur commun au tronçon intermédiaire 8 et au tronçon d'extrémité 10 droit, le tronçon intermédiaire 8 et le tronçon d'extrémité 10 droit comprennent au moins une génératrice C commune s'étendant de manière rectiligne le long du tronçon intermédiaire 8 et du tronçon d'extrémité 10 droit.

Telle que représentée sur la figure 3, la dimension extérieure D1 de la section transversale du tronçon d'extrémité 10 droit prise suivant la direction D perpendiculaire au plan P tangent extérieur commun est inférieure à celle D2 du tronçon intermédiaire 8.

Telle que représentée sur la figure 2, le tronçon de transition 12 droit possède une section transversale variable variant progressivement et continûment de la section transversale du tronçon intermédiaire 8 jusqu'à la section transversale du tronçon d'extrémité 10 droit.

Le plan P tangent extérieur commun au tronçon intermédiaire 8 et au tronçon d'extrémité 10 est également tangent au tronçon de transition 12 situés entre eux, sur toute la longueur du tronçon de transition 12. La génératrice commune C s'étend également de manière rectiligne le long du tronçon de transition 12.

La paroi du tube 4 s'étend le long de la ou chaque génératrice commune C de manière rectiligne le long du tronçon intermédiaire 8, du tronçon d'extrémité 10, et, le cas échéant, du tronçon de transition 12. Un dégagement est ménagé du côté opposé du tronçon d'extrémité et permet le passage d'équipements associé à la planche de bord du véhicule automobile, par exemple un conduit d'aération prévu pour déboucher latéralement sur la planche de bord.

Il en résulte que le tube 4 est rigide et que son intégration dans la planche de bord est facilitée, en offrant notamment plus de possibilités pour les concepteurs pour le dessin de la planche de bords en fonction de la position des points de fixation du tube 4 aux montants 5.

Tel que représenté sur les figures 2 et 3, le plan P est un plan sensiblement horizontal, et la direction D est sensiblement verticale. Ainsi, le tronçon d'extrémité 10 droit est de hauteur inférieure à celle du tronçon intermédiaire 8. Le segment inférieur de la paroi du tube 4 est sensiblement rectiligne et un dégagement est ménagé sur le dessus du tronçon d'extrémité 10 droit. La section transversale du tronçon d'extrémité 10 possède une aire inférieure à celle de la section transversale du tronçon intermédiaire 8 et/ou un contour extérieur de périmètre inférieur à celui de la section transversale du tronçon intermédiaire 8.

Avantageusement, le tronçon d'extrémité 10 s'étend à l'intérieur de l'enveloppe cylindrique du tronçon intermédiaire 8.

Ces limites géométriques permettent l'obtention d'un tronçon d'extrémité présentant un encombrement inférieur à celui du tronçon intermédiaire.

Dans l'exemple illustré, le tronçon intermédiaire 8 est de section transversale circulaire et s'étend suivant un axe A, et le tronçon d'extrémité 10 droit est de section transversale circulaire et s'étend suivant un axe B parallèle à l'axe A du tronçon intermédiaire 8 en étant décalé par rapport à celui-ci. Le diamètre extérieur - dimension D1 - du tronçon d'extrémité 10 droit est inférieur à celui - dimension D2 - du tronçon intermédiaire (figure 3). L'aire et le périmètre de la section transversale du tronçon d'extrémité 10 droit sont inférieurs à ceux de la section transversale du tronçon intermédiaire 8.

En variante, le tronçon intermédiaire 8 et/ou le tronçon d'extrémité 10 droit présent(ent) une section transversale de contour différent par exemple une section transversale elliptique dont le grand axe peut être orienté par exemple suivant l'axe longitudinal X, suivant l'axe vertical Z ou suivant toute direction dans un plan longitudinal du véhicule automobile défini par l'axe longitudinal X et l'axe vertical Z.

Dans l'exemple illustré, le tronçon intermédiaire 8 et le tronçon d'extrémité 10 droit comprennent un seul plan P tangent extérieur commun et une seule génératrice C commune.

En variante, ils peuvent comprendre plusieurs plans extérieurs tangents communs et plusieurs génératrices communes. Pour ce faire, dans un mode de réalisation possible, le tronçon d'extrémité 10 droit comprend une section transversale dont le contour est identique à celui de la section transversale du tronçon intermédiaire 8 dans un secteur angulaire, et différent dans le secteur angulaire restant.

Dans l'exemple illustré, le tronçon de transition 12 droit présente une section transversale décroissant plus rapidement au centre du tronçon de transition qu'aux extrémités du tronçon de transition 12 pour assurer un changement plus progressif à la jonction avec les tronçons cylindriques.

En variante, le tronçon de transition 12 varie linéairement entre le tronçon intermédiaire 8 et le tronçon d'extrémité 10. Dans ce cas présent, le tronçon de transition serait tronconique.

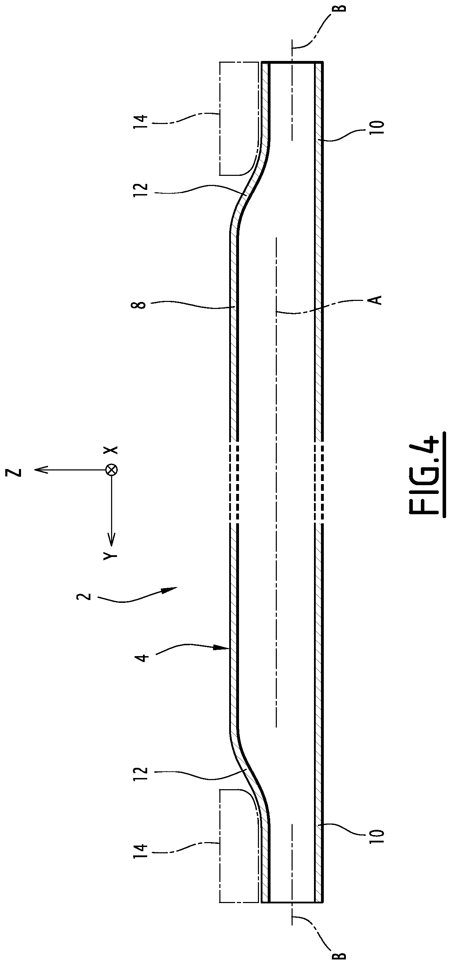

Dans le mode de réalisation illustré, et tel que représenté sur la figure 4, les deux tronçons d'extrémité 10 droit et gauche et leurs tronçons de transition 12 associés sont symétriques par rapport à un plan longitudinal médian. Ainsi, le tronçon d'extrémité 10 gauche est cylindrique de section transversale circulaire d'axe B identique à celui du tronçon d'extrémité 10 droit et de même diamètre.

En variante, les deux tronçons d'extrémité peuvent être différents l'un de l'autre par le contour de leur sections transversales respectives, les dimensions de leur sections transversales respectives, leur longueur axiale et/ou, le cas échéant, la position de leur axe, chacun des tronçons d'extrémité possédant au moins un plan tangent extérieur commun avec le tronçon intermédiaire, commun ou non avec l'autre tronçon d'extrémité.

Par exemple, dans une variante, les deux tronçons d'extrémité sont cylindriques de sections transversales circulaires de même diamètre mais d'axes décalés et possèdent chacun un plan tangent extérieur commun avec le tronçon intermédiaire. Leurs plans tangents extérieurs communs sont dans ce cas différents. Dans une autre variante, les deux tronçons d'extrémité sont cylindriques de sections transversales circulaires de diamètres différents et possèdent chacun un plan tangent extérieur commun avec le tronçon intermédiaire. Leurs plans tangents extérieurs communs sont dans ce cas différents ou identiques.

En option ou en alternative, les tronçons d'extrémité possèdent des longueurs axiales différentes. Par exemple, le tronçon intermédiaire 8 peut s'étendre sur une longueur axiale limité du côté du conducteur afin de définir un tronçon rigide pour la réception de la colonne de direction, le tronçon d'extrémité 10 côté passager étant plus long que le tronçon d'extrémité 10 côté conducteur.

En variante, un seul des deux tronçons d'extrémité possède une section transversale différente de celle du tronçon intermédiaire, l'autre tronçon d'extrémité possède la même section transversale que le tronçon intermédiaire.

Le tube 4 est monobloc. Il est formé de façon unitaire d'un seul tenant. Pour ce faire, le tube 4 est par exemple obtenu par mise en forme par hydroformage. Dans ce cas, une ébauche tubulaire ayant par exemple la section transversale des tronçons d'extrémité 10, est introduite dans un moule présentant une cavité dont le contour extérieur correspond à celui que l'on désire pour le tube final, et un fluide par exemple de l'eau, est introduit sous pression à l'intérieur de l'ébauche jusqu'à déformer le tronçon intermédiaire pour lui conférer sa section transversale finale. En variante, il est également possible d'utiliser un procédé d'emboutissage.

La traverse de planche de bord ainsi obtenue présente une rigidité importante. La présence d'au moins un tronçon d'extrémité de section différente de celle du tronçon intermédiaire facilite la conception de la planche de bord dans son ensemble en permettant par exemple le passage de conduit d'aération dans les espaces ainsi dégagés aux extrémités du tube.

Des conduits d'aération 14 passant au-dessus des tronçons d'extrémité 10 sont représentés en pointillés sur la figure 4.

Le tube comprenant une paroi possédant des portions s'étendant de manière rectiligne le long du tronçon intermédiaire et des tronçons d'extrémité conserve une rigidité satisfaisante.

Avantageusement, le tube 4 peut présenter une paroi d'épaisseur variable. Ceci permet d'obtenir une traverse présentant la rigidité requise tout en optimisant la masse de la traverse.

## Revendications

1. Traverse de planche de bord de véhicule automobile, du type comprenant un tube (4) destiné à être fixé à ses extrémités aux montants latéraux avant de la structure d'un véhicule automobile, le tube (4) comprenant deux tronçons d'extrémité (10) et un tronçon intermédiaire (8), dans laquelle le tronçon intermédiaire (8) est cylindrique de section transversale à contour extérieur convexe, dans laquelle au moins un des deux tronçons d'extrémité (10) est cylindrique de section transversale de contour extérieur convexe différente de celle du tronçon intermédiaire, possède un plan (P) tangent extérieur commun avec le tronçon intermédiaire (8), ledit tronçon d'extrémité (10) et le tronçon intermédiaire (8) comprenant au moins une génératrice (C) commune s'étendant de manière rectiligne le long du tronçon intermédiaire (8) et du tronçon d'extrémité (10), et présente une dimension extérieure (D1) prise suivant une direction (D) perpendiculaire au plan (P) tangent extérieur commun inférieure à celle (D2) du tronçon intermédiaire (8), **caractérisé en ce que** chaque extrémité du tube (4) est munie d'une attache (6) rapportée sur cette extrémité pour la fixation sur un montant (5) respectif, et chaque tronçon d'extrémité (10) possède une section transversale d'aire inférieure à celle de la section transversale du tronçon intermédiaire (8).

2. Traverse selon la revendication 1, dans lequel le ou chaque tronçon d'extrémité (10) s'étend à l'intérieur de l'enveloppe cylindrique externe du tronçon intermédiaire (8).

3. Traverse selon la revendication 1 ou 2, dans laquelle le ou chaque tronçon d'extrémité (10) possède une section transversale de périmètre inférieur à celui de la section transversale du tronçon intermédiaire (8).

4. Traverse selon l'une quelconque des revendications précédentes, dans laquelle le tronçon intermédiaire (8) possède une section transversale circulaire ou elliptique.

5. Traverse selon l'une quelconque des revendications précédentes, dans laquelle, le ou chaque tronçon d'extrémité (10) possède une section transversale circulaire ou elliptique.

6. Traverse selon l'une quelconque des revendications précédentes, dans laquelle, le ou chaque tronçon d'extrémité (10) présente une section transversale circulaire de diamètre extérieur (D1) inférieur à celui (D2) de la section transversale circulaire du tronçon intermédiaire (8).

7. Traverse selon l'une quelconque des revendications précédentes, dans laquelle le ou chaque tronçon d'extrémité (10) est relié au tronçon intermédiaire (8) par un tronçon de transition (12), présentant une section transversale variant progressivement entre le tronçon intermédiaire (8) et le tronçon d'extrémité (10).

8. Traverse selon la revendication 7, dans laquelle le plan (P) tangent extérieur commun au tronçon intermédiaire (8) et au tronçon d'extrémité (10) étant tangent extérieurement au tronçon de transition (12) sur toute la longueur du tronçon de transition (12).

9. Traverse selon l'une quelconque des revendications précédentes, dans laquelle chacun des deux tronçons d'extrémité (10) est cylindrique de section transversale de contour extérieur convexe différente de celle du tronçon intermédiaire (8), possède un plan (P) tangent extérieur commun avec le tronçon intermédiaire (8) et présente une dimension extérieure prise suivant une direction perpendiculaire au plan (P) tangent extérieur commun inférieure à celle du tronçon intermédiaire (10).

10. Traverse selon la revendication 9, dans laquelle les deux tronçons d'extrémité (10) possèdent la même section transversale.

11. Traverse selon la revendication 9 ou 10, dans laquelle les deux tronçons d'extrémité (10) sont coaxiaux ou désaxés l'un par rapport à l'autre

12. Traverse selon l'une quelconque des revendications 9 à 11, dans laquelle les deux tronçons d'extrémité (10) sont de même longueur ou de longueurs différentes.

13. Planche de bord de véhicule automobile comprenant une traverse de planche de bord selon l'une quelconque des revendications précédentes.

14. Véhicule automobile comprenant une traverse de planche de bord selon l'une quelconque des revendications 11 à 12.

## Patentansprüche

1. Querträger einer Instrumententafel eines Kraftfahrzeugs der Art, umfassend ein Rohr (4), das bestimmt ist, an seinen Enden an den vorderen seitlichen Säulen der Struktur eines Kraftfahrzeugs befestigt zu sein, wobei das Rohr (4), das zwei Endabschnitte (10) und einen Zwischenabschnitt (8) umfasst, wobei der Zwischenabschnitt (8) im Querschnitt zylindrisch mit konvexer Außenkontur ist, wobei mindestens einer der zwei Endabschnitte (10) im Querschnitt vom Zwischenabschnitt unterschiedlich zylindrisch mit konvexer Außenkontur ist, eine mit dem Zwischenabschnitt (8) gemeinsame tangentiale äußere Ebene (P) besitzt, wobei der Endabschnitt (10) und der Zwischenabschnitt (8) mindestens eine gemeinsame Mantellinie (C) umfassen, die sich gerade entlang des Zwischenabschnitts (8) und des Endabschnitts (10) erstreckt, und ein Außenmaß (D1), gemessen gemäß einer zur gemeinsamen tangentialen äußeren Ebene (P) senkrechten Richtung (D), aufweist, das kleiner als das Maß (D2) des Zwischenabschnitts (8) ist, **dadurch gekennzeichnet, dass** jedes Ende des Rohrs (4) mit einer an diesem Ende angebrachten Befestigung (6) für die Befestigung auf einer jeweiligen Säule (5) ausgestattet ist und dass jeder Endabschnitt (10) einen Querschnitt mit einer kleineren Fläche als die des Querschnitts des Zwischenabschnitts (8) besitzt.

2. Querträger nach Anspruch 1, wobei sich der oder jeder Endabschnitt (10) im Innern der äußeren zylindrischen Hülle des Zwischenabschnitts (8) erstreckt.

3. Querträger nach Anspruch 1 oder 2, wobei der oder jeder Endabschnitt (10) einen Querschnitt mit einem kleineren Umfang als der des Querschnitts des Zwischenabschnitts (8) besitzt.

4. Querträger nach einem der vorangehenden Ansprüche, wobei der Zwischenabschnitt (8) einen kreisförmigen oder elliptischen Querschnitt besitzt.

5. Querträger nach einem der vorangehenden Ansprüche, wobei der oder jeder Endabschnitt (10) einen kreisförmigen oder elliptischen Querschnitt besitzt.

6. Querträger nach einem der vorangehenden Ansprüche, wobei der oder jeder Endabschnitt (10) einen kreisförmigen Querschnitt mit einem Außendurchmesser (D1) aufweist, der kleiner als der Außendurchmesser (D2) des kreisförmigen Querschnitts des Zwischenabschnitts (8) ist.

7. Querträger nach einem der vorangehenden Ansprüche, wobei der oder jeder Endabschnitt (10) mit dem Zwischenabschnitt (8) mittels eines Übergangsabschnitts (12) verbunden ist, der einen Querschnitt aufweist, der sich nach und nach zwischen dem Zwischenabschnitt (8) und dem Endabschnitt (10) verändert.

8. Querträger nach Anspruch 7, wobei die mit dem Zwischenabschnitt (8) und mit dem Endabschnitt (10) gemeinsame tangentiale äußere Ebene (P) mit dem Übergangsabschnitts (12) über die gesamte Länge des Übergangsabschnitts (12) außen tangential ist.

9. Querträger nach einem der vorangehenden Ansprüche, wobei jeder der zwei Endabschnitte (10) im Querschnitt zylindrisch mit konvexer Außenkontur unterschiedlich vom Zwischenabschnitts (8) ist, eine mit dem Zwischenabschnitt (8) gemeinsame tangentiale äußere Ebene (P) besitzt und ein Außenmaß, gemessen gemäß einer zur gemeinsamen tangentialen äußeren Ebene (P) senkrechten Richtung, aufweist, das kleiner als das des Zwischenabschnitts (10) ist.

10. Querträger nach Anspruch 9, wobei die zwei Endabschnitte (10) denselben Querschnitt besitzen.

11. Querträger nach Anspruch 9 oder 10, wobei die zwei Endabschnitte (10) koaxial oder achsversetzt zueinander sind.

12. Querträger nach einem der Ansprüche 9 bis 11, wobei die zwei Endabschnitte (10) dieselbe Länge oder unterschiedliche Längen haben.

13. Instrumententafel eines Kraftfahrzeugs, umfassend einen Instrumententafel-Querträger nach einem der vorangehenden Ansprüche.

14. Kraftfahrzeug, umfassend einen Instrumententafel-Querträger nach einem der Ansprüche 11 bis 12.

## Claims

1. A motor vehicle dashboard cross-member, of the type comprising a tube (4) intended to be fastened at its ends to the front lateral struts of the structure of a motor vehicle, the tube (4) comprising two end segments (10) and an intermediate segment (8), in which the intermediate segment (8) has a cylindrical cross-section with a convex outer contour, wherein at least one of the two end segments (10) has a cylindrical cross-section with a convex outer contour different from that of the intermediate segment, has an outer tangential plane (P) shared with the intermediate segment (8), said end segment (10) and the intermediate segment (8) comprising at least one shared generatrix (C) extending rectilinearly along the intermediate segment (8) and the end segment (10), and has an outer dimension (D1) considered along a direction (D) perpendicular to the shared outer tangential plane (P) smaller than that (D2) of the intermediate segment (8), **characterized in that** each end of the tube (4) is provided with a fastener (6) attached on that end for fastening on a respective strut (5), and each end segment (10) has a cross-section with an area smaller than that of the cross-section of the intermediate segment (8).

2. The cross-member according to claim 1, wherein the or each end segment (10) extends inside the outer cylindrical enclosure of the intermediate segment (8).

3. The cross-member according to claim 1 or 2, wherein the or each segment (10) has a cross-section with a perimeter smaller than that of the cross-section of the intermediate segment (8).

4. The cross-member according to any one of the preceding claims, wherein the intermediate segment (8) has a circular or elliptical cross-section.

5. The cross-member according to any one of the preceding claims, wherein the or each end segment (10) has a circular or elliptical cross-section.

6. The cross-member according to any one of the preceding claims, wherein the or each end segment (10) has a circular cross-section with an outer diameter (D1) smaller than that (D2) of the circular cross-section of the intermediate segment (8).

7. The cross-member according to any one of the preceding claims, wherein the or each end segment (10) is connected to the intermediate segment (8) by a transitional segment (12), having a cross-section varying gradually between the intermediate segment (8) and the end segment (10).

8. The cross-member according to claim 7, wherein the outer tangential plane (P) shared by the intermediate segment (8) and the end segment (10) is outwardly tangential to the transitional segment (12) over the entire length of the transitional segment (12).

9. The cross-member according to any one of the preceding claims, wherein each of the two end segments (10) has a cylindrical cross-section with a convex outer contour different from that of the intermediate segment (8), has an outer tangential plane (P) shared with the intermediate segment (8) and has an outer dimension considered along a direction perpendicular to the shared outer tangential plane (P) smaller than that of the intermediate segment (10).

10. The cross-member according to claim 9, wherein the two end segments (10) have the same cross-section.

11. The cross-member according to claim 9 or 10, wherein the two end segments (10) are coaxial or off-centered relative to one another.

12. The cross-member according to any one of claims 9 to 11, wherein the two end segments (10) have the same length or different lengths.

13. A motor vehicle dashboard comprising a dashboard cross-member according to any one of the preceding claims.

14. A motor vehicle comprising a dashboard cross-member according to any one of claims 11 to 12.
